# EUROPEAN PATENT APPLICATION

(11) **EP 1 337 094 A2**
(43) Date of publication of application: **20.08.2003**
(21) Application number: 03000318.0
(22) Date of filing: 09.01.2003
(51) Int. Cl.: H04M 3/28

(54) **Method and apparatus for testing a communications wire**

(30) Priority: 15.02.2002 JP 2002037886
(71) Applicant: MATSUSHITA ELECTRIC INDUSTRIAL CO., LTD., Kadoma-shi, Osaka 571-8501 (JP)
(72) Inventor: Maki, Masahiro, Lizuka-shi, Fukuoka-ken, Lizuka 820-0002 (JP); Igata, Yuji, Fukuoka-ken, Chikushino 818-0035 (JP); Hasako, Satoshi, Lizuka-shi, Fukuoka-ken, Lizuka 820-0054 (JP); Kondou, Junji, Fukuoka-ken, Tagawa-gun 822-1101 (JP)
(74) Representative: Holmes, Miles

(57) **Abstract**

The status of communications by a specific metallic cable set among a number of metallic cables and that are arranged close to each other in a transmission line(1) is inspected. An inspection signal is supplied to flow in one metallic cable(2), an interference signal flowing in other metallic cable(3) is measured in response to the flow of this inspection signal, and based on the relationship between the inspection signal and the interference signal, it is judged whether or not the status of communications by the specific metallic cable set is fine. A measuring device(21) measures components other than a descending carrier to be received by a transmitter-receiver(22) from a repeater(10), and includes information on the components in an ascending carrier. The repeater(10) extracts the information on the components from the ascending carrier received from the one transmitter-receiver(22), and based on the extracted information, makes the frequency characteristics of the one metallic cable(22) different from that of other metallic cable(23) so that the components are reduced.

## Description

The present invention relates to a method for inspecting a cable set in a transmission line and related techniques in which a number of metallic cables are arranged close to each other inside the transmission line.

For example, a transmission line composed of a plurality of metallic cables housed in one case as in an xDSL communications system has been increasingly employed in communications systems.

In communications using such a transmission line, crosstalk between metallic cables is one of the factors of deterioration in the quality.

As crosstalk, near-end crosstalk and far-end crosstalk exist, and near-end crosstalk generally has a high noise level, and causes significant deterioration in transmission performance.

However, in a case where metallic cables are distributed to respective rooms in a building such as a condominium or an office building which has a plurality of rooms/offices, no countermeasures have been taken for such near-end crosstalk. Therefore, in some cases, near-end crosstalk deteriorates communications quality, and depending on the circumstances, communications in itself become impossible. Rearranging the transmission line is the only effective countermeasure, which is very costly.

Therefore, an object of the invention is to provide a technique which improves communications quality in a transmission line with a number of metallic cables.

A first aspect of the present invention provides a method for inspecting a cable set in a transmission line, in which the status of communications by a set of one metallic cable and other metallic cable among a number of metallic cables that are arranged close to each other in a transmission line is inspected, comprising: supplying an inspection signal in the one metallic cable to generate a flow in the one metallic cable; measuring interference signals that flow in the other metallic cable in response to the flow of this inspection signal; and based on the relationship between the inspection signal and the interference signals, judging whether or not the status of communications by the set of the one metallic cable and the other metallic cable is fine.

A second aspect of the present invention provides, in a communication system comprising: a repeater for a superior line; a transmission line which is connected to a downstream side of the repeater and has a number of metallic cables, having one metallic cable and other metallic cable different from the one metallic cable, arranged close to each other inside; a first transmitter-receiver to be connected to a downstream side ofthe one metallic cable; and a second transmitter-receiver to be connected to a downstream side of the other metallic cable, a method for inspecting a status of communications by a set of one metallic cable and the other metallic cable, comprising: interposing a first measuring device between the first transmitter-receiver and the one metallic cable; interposing a second measuring device between the second transmitter-receiver and the other metallic cable; measuring, by the first measuring device, components other than a signal to be exchanged from the first transmitter-receiver with the repeater; measuring, by the second measuring device, components other than a signal to be exchanged from the second transmitter-receiver with the repeater; and based on these components, judging whether or not the status of communications by the set of the one metallic cable and the other metallic cable is fine.

With these structures, interference between one metallic cable and other metallic cable is suppressed to reduce near-end crosstalk, whereby communications quality can be improved.

The above, and other objects, features and advantages of the present invention will become apparent from the following description read in conjunction with the accompanying drawings, in which like reference numerals designate the same elements.
Fig. 1 is a block diagram of an apparatus for inspecting a cable set in a transmission line in Embodiment 1 of the invention;
Fig. 2 is a block diagram of a communications system in Embodiment 2 of the invention;
Fig. 3 is an illustration of traffic volume in Embodiment 2 of the invention;
Fig. 4 is a block diagram of a communications system in Embodiment 3 of the invention;
Fig. 5 to Fig. 8 are explanatory views of communications properties in Embodiment 3 of the invention.

Hereinafter, embodiments of the invention will be described with reference to the accompanying drawings.

### (Embodiment 1)

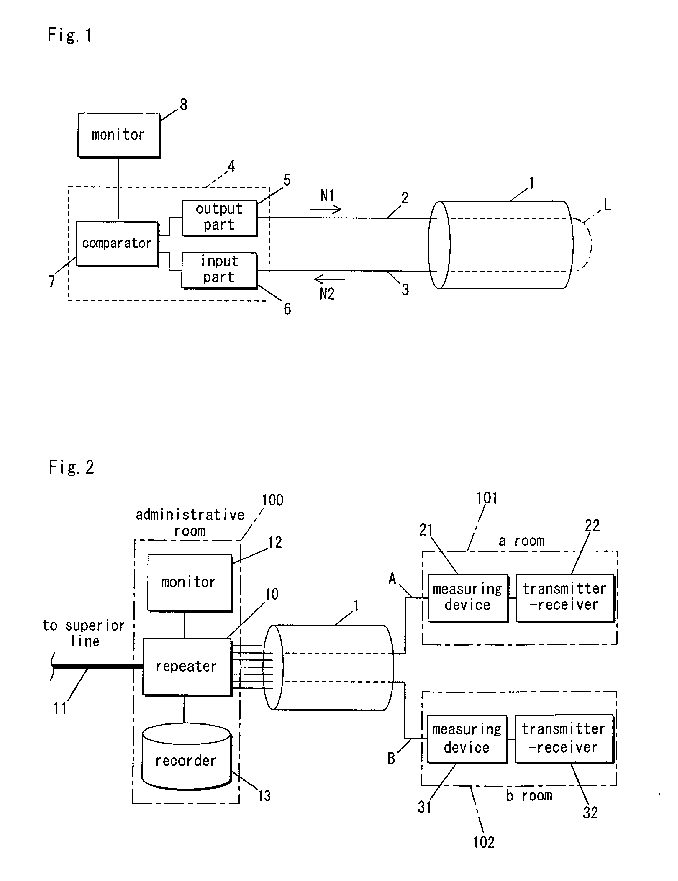

Fig. 1 is a block diagram of an apparatus for inspecting a cable set in a transmission line in Embodiment 1 of the invention.

As shown in Fig. 1, in a transmission line 1, a number of metallic cables 2, 3... are arranged close to each other. These metallic cables 2, 3... may be formed by twisting several cables or being coaxially arranged. In short, the form of the metallic cables may be optional under a condition that the cables have the potential for near-end crosstalk.

In this example, a preferable set of metallic cables is selected from this transmission line 1 by using the apparatus of Fig. 1.

Such selection is made typically in a case where xDSL subscribers arise one by one in a condominium or an office building and construction for the subscribers is carried out or connection and administration of metallic cables are carried out (since practical benefits of this case are great), however, in principle, the selection can be made under any condition.

Furthermore, the transmission line 1 may have already been installed or will be installed in a condominium or an office building.

Among a number of metallic cables comprising the transmission line 1, a specific set of cables is selected. Herein, as shown in Fig. 1, metallic cables 2 and 3 are selected.

It is not always necessary that this set consists of two cables as shown in the figure, and it may consist of three or four cables.

Between these metallic cables 2 and 3, to one metallic cable 2, an output part 5 of an interference measuring device 4 is connected.

This output part 5 outputs an inspection signal with an optional frequency to one metallic cable 2 as shown by the arrow N1. For example, in the case of xDSL communications, an inspection signal in a frequency band used for xDSL communications (signal with a frequency higher than 4kHz of a voice signal) is outputted.

Herein, it would be ideal if the other metallic cable 3 has no interference with the metallic cable 2 and the interference signal in the direction of the arrow N2 becomes zero even when an inspection signal is supplied to flow in the direction of the arrow N1.

However, in some cases, a virtual loop L is formed, and in this case, the interference signal flowing in the direction of the arrow N2 in the other metallic cable 3 does not become zero.

Therefore, an input part 6 of the interference measuring device 4 is connected to the other metallic cable 3 and the interference signal is measured by the input part 6.

Then, a comparator 7 compares the inspection signal outputted from the output part 5 and the interference signal measured by the input part 6 to investigate the relationship of these. Herein, the comparator 7 compares the inspection signal and the interference signal based on the voltage levels.

The results of this comparison are displayed on a monitor 8. As a detailed appropriate example of this comparison, the comparator 7 determines a difference between the inspection signal and the interference signal, compares this difference and a threshold set in advance based on experience, and judges whether or not the communications status is fine.

In the abovementioned description, for simplification , the other metallic cable 3 the interference signal of which is to be measured consists of only one cable. However, it is possible that a plurality of input parts 6 are provided and connected to two or more other metallic cables, or a switch for switching other metallic cable to which the input part 6 is connected, whereby interference signals in two or more other metallic cables are concurrently measured.

With this construction, interference measurement can be made without connection changes in the cables, and this improves inspection efficiency.

As a result of the abovementioned comparison, among other metallic cables, cables the interference signals of which are small are selected as preferable other metallic cables.

### (Embodiment 2)

Fig. 2 is a block diagram of a communications system in Embodiment 2 of the invention. The communications system of Fig. 2 is installed in a building such as a condominium or an office building. In the illustrated example, this building includes an administrative room 100, an a room 101, and a b room 102.

Herein, in the administrative room 100, a superior line 11 such as a public circuit network is led in, and this superior line 11 is connected to the upper stream side of a repeater 10 of this building.

On the other hand, to the downstream side of the repeater 10, a transmission line 1 that is equivalent to the line described in Embodiment 1 is connected. The respective metallic cables comprising the transmission line 1 are distributed to each room through the inside of this building.

In this example, one metallic cable A is distributed to the a room 101, and another metallic cable B is distributed to the b room 102.

Herein, as is the case with Embodiment 1, a plurality of metallic cables comprising the transmission line 1 (including one metallic cable A and the other metallic cable B) may be twisted or not be twisted, and it is only required that these cables become closer to each other at at least one point (for example, near the repeater 10) as the potential for crosstalk increases.

The repeater 10 installed in the administrative room 100 relays data exchange between the superior line 11 and transmitter-receivers (transmitter-receivers 22 and 32) located at the downstream side of the transmission line 1.

In the a room 101, a transmitter-receiver 22 for transmitting and receiving data by using one metallic cable A is installed. A measuring device 21 is interposed between one metallic cable A and the transmitter-receiver 22.

This measuring device 21 measures the volume or intensity of components other than signals to be transmitted or received by the transmitter receiver 22 (that is, components such as near-end crosstalk that is impermissible in principle). As this measuring device 21, a network analyzer, an oscilloscope, a voltmeter for each frequency, or a spectrum analyzer can be used. For easy measurement, the measuring device 21 can be constructed so as to measure a signal level (for example, a voltage level) at a timing at which no signal is outputted from the transmitter-receiver 22 and judge the results of measurement as the abovementioned components.

When the measuring device 21 measures the abovementioned components, the measuring device 21 informs the repeater 10 of information on the abovementioned components through one metallic cable A.

Also, in the b room 102, as is the case with the a room 101, a measuring device 31 and a transmitter-receiver 32 are installed.

When information on the abovementioned components is inputted from the measuring devices 21 and 31, the repeater 10 successively records the information into a recorder 13 at each inputted time. It is only required for the recorder 13 to read and write the information, and typically, the recorder comprises a memory and a hard disk apparatus.

When this information is stored in the recorder 13, the repeater 10 judges whether or not the communications status is fine based on this information (this judgement itself may be carried out in the same as in Embodiment 1), and displays the result of judgement on the monitor 12.

As clearly understood from the abovementioned description, in the present embodiment, different from Embodiment 1, it is not necessary that an inspection signal is actively supplied to flow in the one metallic cable (although an inspection signal is allowed to flow).

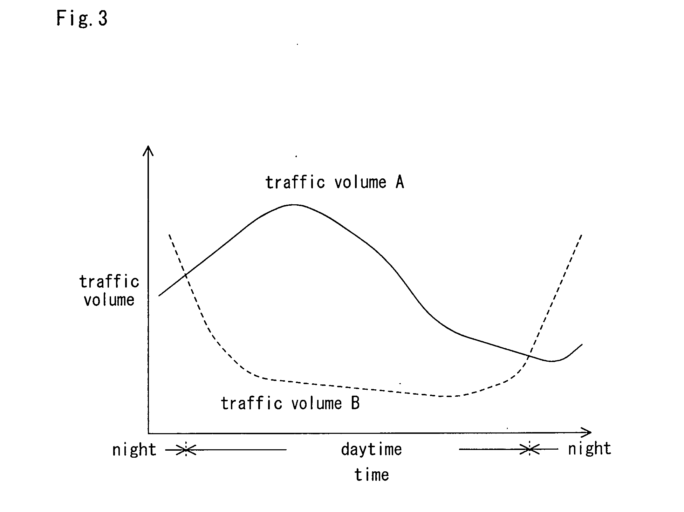

The graph of Fig. 3 shows an example of changes in the abovementioned components with an elapse of time (however, not the abovementioned components but traffic volume is shown).

In this example, the traffic volume in the one metallic cable A (that is, the repeater 10 and the transmitter-receiver 22) is large during the daytime and small during the night. On the other hand, the traffic volume in the other metallic cable (that is, the repeater 10 and the transmitter-receiver 32) is small during the daytime and large during the night.

Thus, in reality, there are some cases where a resident of the a room 101 (a user of the transmitter-receiver 22) and a resident of the b room 102 (a user of the transmitter-receiver 32) access the transmission line 1 in different patterns from each other.

Thus, when the patterns of the traffic volume are temporally different from each other, even if near-end crosstalk occurs with simultaneous communications of a large volume of information by the one metallic cable A and the other metallic cable B, it is expected, in actuality, that deterioration in communications status is slight or can be ignored.

In the present embodiment, temporal changes in the abovementioned components are recorded in the recorder 13 and the repeater 10 judges whether or not the communications status is fine based on the records, so that in the abovementioned case that has no problem in practical use, judgement of "no problem in particular" can be correctly made.

According to the invention, the status of communications by a set of metallic cables can be correctly judged.

Thereby, a set of metallic cables having a potential for near-end crosstalk can be avoided, and it is possible that preferable metallic cables are selected and communications quality is improved.

Even when no inspection signal is supplied, communications status inspection can be carried out.

Furthermore, inspection appropriate to the real circumstances can be carried out based on temporal changes in traffic.

### (Embodiment 3)

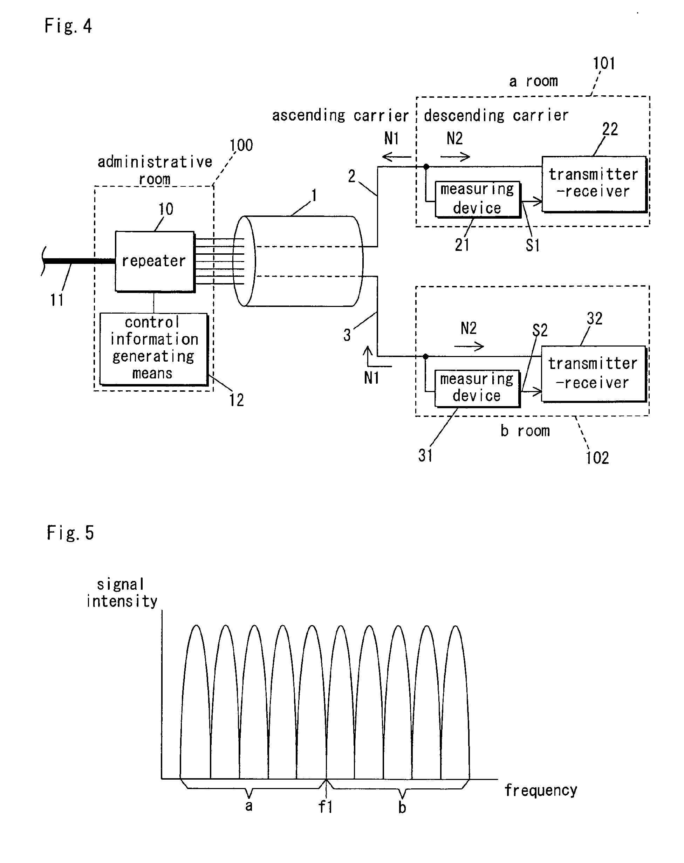

Fig. 4 is a block diagram of a communications system in Embodiment 3 of the invention. The communications system of Fig. 4 is installed in a building such as a condominium, an office building, or a hospital. In this example shown in Fig. 4, this building has an administrative room 100, an a room 101, and a b room 102.

Herein, in the administrative room 100, a superior line 11 such as a public circuit network is led in, and this superior line 11 is connected to the upper stream side of a repeater 10 of this building.

On the other hand, to the downstream side of the repeater 10, a transmission line 1 is connected. As shown in Fig. 1, this transmission line 1 is formed by arranging a number of metallic cables 2, 3... close to each other. The metallic cables 2, 3... are formed by twisting several cables or being coaxially arranged. In short, the form of the metallic cables may be optional under a condition that the cables have a potential for near-end crosstalk.

The respective metallic cables comprising the transmission line 1 are distributed to each room through the inside of this building. In this example, one metallic cable 2 is distributed to the a room 101, and the other metallic cable 3 is distributed to the b room 102.

The repeater 10 installed in the administrative room 100 relays carriers between the superior line 11 and transmitter-receivers (transmitter-receivers 22 and 32) located at the downstream side of the transmission line 1. Herein, a carrier floating in the direction of the arrow N1 is referred to as an ascending carrier, and a carrier flowing in the direction of the arrow N2 is referred to as a descending carrier.

In the a room 101, a transmitter-receiver 22 which transmits and receives data by using the one metallic cable 2 is installed. A measuring device 21 is interposed between the one metallic cable 2 and the transmitter-receiver 22.

This measuring device 21 measures the volume or intensity of components other than signals to be transmitted or received by the transmitter-receiver 22 (that is, components such as near-end crosstalk that is impermissible in principle). As this measuring device 21, a network analyzer, an oscilloscope, a voltmeter for each frequency, or a spectrum analyzer can be used. For easy measurement, the measuring device 21 can be constructed so as to measure the signal level (for example, the voltage level) at a timing at which no signals are outputted from the transmitter-receiver 22 and judges the results of measurement as the abovementioned components.

When the measuring device 21 measures the abovementioned components, the measuring device outputs the results S1 of measurement to the transmitter-receiver 22.

When the results S1 of measurement are inputted, the transmitter-repeater 22 includes the results S1 of measurement in an ascending carrier (arrow N1), and outputs the results S1 of measurement to the repeater via the transmission line 1.

When the repeater 10 receives the results S1 of measurement, it transfers the results to a control information generating means 15. The control information generating means 15 controls communications properties of carriers that pass through the metallic cables of the transmission line 1 for each metallic cable.

The control information generating means 15 determines the communications properties so that the volume of the results S1 of measurement of a metallic cable becomes less than that of the other metallic cable.

When the communications properties are determined, the repeater 10 communicates with the transmitter-receivers connected to the downstream sides of the metallic cables through the respective corresponding metallic cables.

Thereby, crosstalk in a metallic cable due to interference with other metallic cables is suppressed and communications quality is improved.

Furthermore, also in the b room 102, a measuring device 31 and a transmitter-receiver 32 are installed as in the same manner as the a room 101.

Hereinafter, concrete examples of communications properties will be described.

### (First example)

In the first example, as the abovementioned communications properties, the frequency characteristics of the carriers flowing in the respective metallic cables are employed. Thereby, the carriers flowing in the respective metallic cables have frequency components different from each other, whereby interference between different metallic cables is suppressed.

Since Fig. 4 shows two metallic cables 2 and 3, an example in which the frequency characteristics are divided into two time zones is described below, however, this is only one example, and the invention can be applied in the same manner to a case where the frequency band is divided into three or more.

Fig. 5 shows an example in which the frequency band is divided into two. Herein, one threshold f1 is determined, and a frequency lower than the threshold f1 is assigned to the transmitter-receiver 22 of the a room 101, and a frequency higher than the threshold f2 is assigned to the transmitter-receiver 32 of the broom 102.

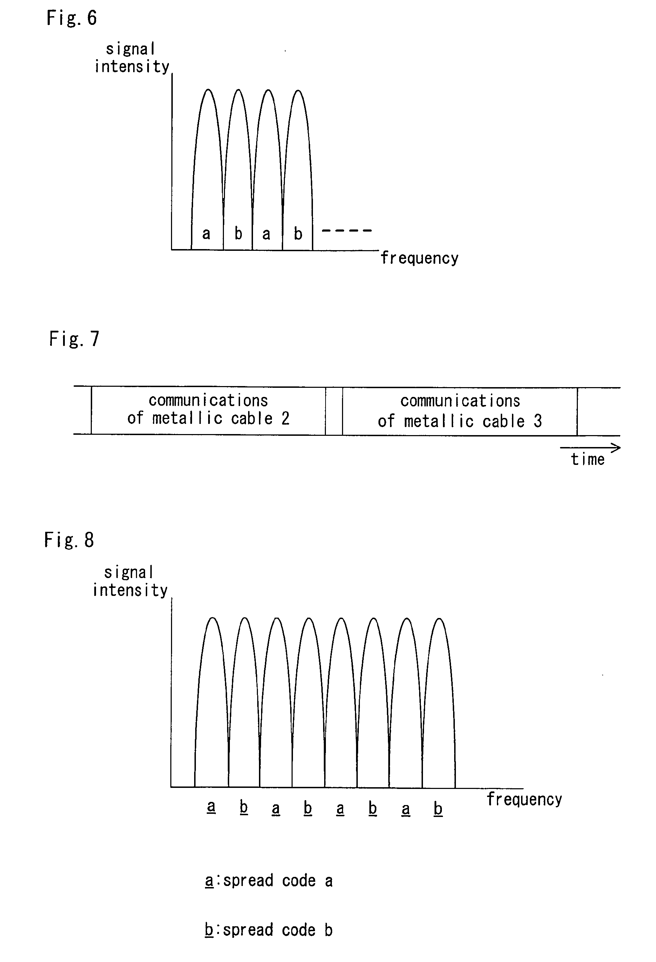

Different from Fig. 5, the frequency band can be alternately divided as shown in Fig. 6.

### (Second example)

In the second example, time current characteristics of carriers flowing in the respective metallic cables are employed as the abovementioned communications properties. Thereby, the carriers flowing in the respective metallic cables pass through the transmission line 1 in different time zones, and interference between different metallic cables is suppressed.

Since Fig. 4 shows two metallic cables 2 and 3, an example in which the time current characteristics are divided into two is described below, however, this is only one example, and the invention can be applied in the same manner to a case where the time zone is divided into three or more.

Fig. 7 shows an example in which the time zone is divided into two. Herein, since the time zone is divided into two , so that a carrier of the metallic cable 2 and a carrier of the metallic cable 3 alternately pass through the transmission line 1 on the time axis.

### (Third example)

In the third example, as the abovementioned communications properties, the spread codes of carriers flowing in the respective metallic cables are employed. Thereby, the carriers flowing in the respective metallic cables are subjected to spread spectrum modulation by different spread codes, whereby interference between different metallic cables is suppressed.

For example, as shown in Fig. 8, spread codes that alternate with each other on the frequency axis are applied to the carrier of the metallic cable 2 and the carrier of the metallic cable 3.

It is not always necessary that the switching points of the spread codes on the frequency axis are fixed as shown in the figure, and they may be optionally changed.

Furthermore, even application of a combination of two or more of the abovementioned first through third examples is included in the invention.

The present embodiment is constructed as mentioned above, so that interference between one metallic cable and other metallic cables is suppressed to reduce near-end crosstalk, whereby communications quality can be improved.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A method for inspecting a cable set in a transmission line(1), in which said status of communications by a set of one metallic cable(2) and other metallic cable(3) among a number of metallic cables(2)(3) that are arranged close to each other in a transmission line(1) is inspected, comprising:
supplying an inspection signal in said one metallic cable(2) to generate a flow in said other metallic cable(3);
measuring interference signals that flow in said other metallic cable(3) in response to said flow of this inspection signal; and
based on said relationship between said inspection signal and said interference signals, judging whether or not said status of communications by said set of said one metallic cable(2) and said other metallic cable(3) is fine.

2. The method for inspecting a cable set in a transmission line according to Claim 1,
wherein said inspection signal is a signal with an optional frequency, and said relationship between said inspection signal and said interference signals is evaluated by voltage level comparison between said inspection signal and said interference signals.

3. An apparatus for inspecting a cable set in a transmission line(1), comprising:
an output part(5) which is connected to one metallic cable(2) selected among a number of metallic cables(2)(3) comprising a transmission line(1) and supplies an inspection signal to flow in said one metallic cable(2);
an input part(6) which is connected to other metallic cable(3) that is different from said one metallic cable(2) and measures an interference signal flowing in this other metallic cable(3); and
a comparator(7) which compares said inspection signal supplied by said output part(5) and said interference signal measured by said input part(6) and judges whether or not said status of communications by said set of said one metallic cable(2) and said other metallic cable(3) is fine.

4. The apparatus for inspecting a cable set in a transmission line(1) according to Claim 3,
wherein said inspection signal is a signal with an optional frequency, and said comparator(7) judges whether or not said status of communications is fine by voltage level comparison between said inspection signal and said interference signal.

5. A method for selecting a cable set in a transmission line(1) among a number of metallic cables, having one metallic cable(2) and other metallic cable(3) in that are arranged close to each other in said transmission line(1), comprising:
supplying an inspection signal in said one metallic cable(2) to generate a flow in said other metallic cable(3);
measuring interference signals that flow in said other metallic cable(3) in response to said flow of this inspection signal;
based on said relationship between said inspection signal and said interference signals, judging whether or not said status of communications by said set of said one metallic cable(2) and said other metallic cable(3) is fine; and
selecting a cable set of said status of communications by which has been judged as fine.

6. In a communication system comprising:
a repeater(10) for a superior line(11);
a transmission line(1) which is connected to a downstream side of said repeater(10) and has a number of metallic cables, having one metallic cable(A) and other metallic cable(B) different from said one metallic cable(A), arranged close to each other inside;
a first transmitter-receiver(22) to be connected to a downstream side ofsaid one metallic cable(A); and
a second transmitter-receiver(32) to be connected to a downstream side of said other metallic cable(B),
a method for inspecting a status of communications by a set of one metallic cable(A) and said other metallic cable(B), the method comprising:
interposing a first measuring device(21) between said first transmitter-receiver(22) and said one metallic cable(A);
interposing a second measuring device(31) between said second transmitter-receiver(32) and said other metallic cable(B);
measuring, by said first measuring device(21), components other than a signal to be exchanged from said first transmitter-receiver(22) with said repeater(10);
measuring, by said second measuring device(32), components other than a signal to be exchanged from said second transmitter-receiver(32) with said repeater(10); and
based on these components, judging whether or not said status of communications by said set of said one metallic cable(A) and said other metallic cable(B) is fine.

7. The method for inspecting a status of communications by a set of one metallic cable(A) and said other metallic cable(B) according to Claim 6,
wherein information on said components measured by said first measuring device(22) and said components measured by said second measuring device(32) is informed to said repeater(10) via said transmission line(1) and displayed on a monitor(12) connected to said repeater(10).

8. The method for inspecting a status of communications by a set of one metallic cable(A) and said other metallic cable(B) according to Claim 7,
wherein a recorder(13) operable to record temporal changes in said components indicated by said information is connected to said repeater(10).

9. A communications system comprising:
a repeater(10) for a superior line(11) having a downstream side;
one metallic cable(2) which is connected to said downstream side of said repeater(10) and has a downstream side;
other metallic cable(3) different from said one metallic cable(2) which is connected to said downstream side of said repeater(10) and has a downstream side;
a transmission line(1) which is connected to said downstream side of said repeater(10) and has said one metallic cable(2) and said other metallic cable(3) arranged close to each other inside;
one transmitter-receiver(22) which is connected to said downstream side of said one metallic cable(2);
other transmitter-receiver(32) which is connected to said downstream side of other metallic cable(3); and
a measuring device(21) interposed between said one transmitter-receiver(22) and said one metallic cable(2),
wherein said measuring device(21) measures components other than a descending carrier to be received by said transmitter-receiver(22) from said repeater(10) and outputs said results of measurement to said one transmitter-receiver(22);
said one transmitter-receiver(22) includes information on said components in an ascending carrier which said transmitter-repeater(22) transmits to said repeater(10); and
said repeater(10) extracts said information on said components from said ascending carrier received from said transmitter-receiver(22), and based on said extracted information, makes said communications properties of said one metallic cable(2) different from that of said other metallic cable(3) so that said components are reduced.

10. The communications system according to Claim 9, wherein said communications properties are frequency characteristics of carriers.

11. The communications system according to Claim 9, wherein said communications properties are time current characteristics of carriers.

12. The communications system according to Claim 9, wherein said communications properties are spread codes of carriers.
